# FASCICULE DE BREVET EUROPEEN

(11) **EP 0 871 563 B1**
(45) Date de publication et mention de la délivrance du brevet: **27.03.2002**
(21) Numéro de dépôt: 96939964.1
(22) Date de dépôt: 21.11.1996
(51) Int. Cl.: B25J 9/10, B25J 3/02

(54) **APPAREIL DE TELEMANIPULATION DU TYPE "MAITRE-ESCLAVE" A SIX DEGRES DE LIBERTE**
MASTER-SLAVE-HANDHABUNGSVORRICHTUNG MIT SECHS FREIHEITSGRADEN
"MASTER-SLAVE" REMOTE MANIPULATION APPARATUS HAVING SIX DEGREES OF FREEDOM

(30) Priorité: 21.11.1995 FR 9513791
(43) Date de publication de la demande: 21.10.1998
(73) Titulaire: ONERA (Office National d'Etudes et de Recherches Aérospatiales), 92320 Châtillon (FR)
(72) Inventeur: REBOULET, Claude, F-31320 Labege (FR)
(74) Mandataire: Gorree, Jean-Michel
(86) Numéro de dépôt international: FR9601849
(87) Numéro de publication internationale: WO9718927

(56) Documents cités:
- EP-A- 0 595 291
- WO-A-94/26167
- FR-A- 2 672 836
- US-A- 2 774 488

## Description

La présente invention concerne des perfectionnements apportés aux appareils de télémanipulation du type "maître-esclave", destinés à permettre la manipulation à distance d'un objet quelconque par l'intermédiaire d'une transmission mécanique directe.

Un tel appareil permet à un opérateur, actionnant un dispositif "maître" situé dans un espace de commande, de manipuler des objets avec le dispositif "esclave" situé dans un espace de travail distant et inaccessible. Cet appareil peut être agencé pour modifier l'amplitude des mouvements effectués par l'opérateur, par exemple pour la diminuer, ce qui permet alors d'agir dans un espace de travail réduit, homothétique de l'espace de commande.

Les appareils de télémanipulation connus sont généralement réalisés à partir de structures articulées mécaniques du type "série" : ils en présentent donc les inconvénients de lourdeur et d'encombrement.

Le document WO-A-9426167 concerne un robot manipulateur ayant une structure mécanique, formant support d'outils,de type parallélogramme déformable dont la fonction principale est de permettre la rotation d'un bras autour d'un point dégagé de tout support mécanique dans son voisinage. Les outils, lorsqu'ils sont présentés, ont une structure série (c'est-à-dire un bras unique, constitué de plusieurs éléments articulés bout-à-bout, dont une extrémité repose sur une embase et l'autre est libre et mobile). La rotation du bras autour du point d'articulation est de deux ou de trois degrés de liberté. Ce robot manipulateur connu ne comporte ni moyen de couplage mécanique entre le manipulateur maître et un manipulateur esclave, ni un dispositif mécanique à restitution d'effort, tant au niveau du support que des outils, et donc pas de fonction maître-esclave.

La présente invention a essentiellement pour but de proposer un appareil de télémanipulation perfectionné qui bénéficie des avantages de réduction notable de poids et d'encombrement présentés par les structure articulées du type parallèle, et plus particulièrement par celles décriras dans le document FR-A-2 672 836 au nom du Demandeur. En outre et surtout, l'invention a pour but de mettre à profit les nombreuses mobilités des articulations divulguées dans le document précité pour parvenir à la réalisation de dispositifs de télémanipulation à six degrés de liberté qui offrent une souplesse d'emploi optimale.

A ces fins, un appareil de télémanipulation de type "maitre-esclave" à six degrés de liberté, trois en rotation, trois en translation, agencé conformément à l'invention comprend:
- une structure articulée en forme de parallélogramme déformable, comportant deux bras parallèles réunis chacun, d'une part, à une traverse par une articulation à un degré de liberté en rotation autour d'un axe perpendiculaire au plan du parallélogramme et, d'autre part, à un bâti par une articulation à deux degrés de liberté en rotation autour de deux axes, le premier axe étant perpendiculaire au plan du parallélogramme et le second axe étant supporté par le quatrième côté du parallélogramme, les quatre articulations étant situées aux sommets du parallélogramme, les deux bras se prolongeant au-delà de leur articulation respective avec le bâti ;
- deux dispositifs d'articulation à structure parallèle, à savoir un dispositif "maître" et un dispositif "esclave", disposés respectivement à l'extrémité libre de chaque bras, chaque dispositif comportant:
   . une embase supportée par l'extrémité libre du bras correspondant,
   . un organe mobile par rapport à l'embase, formant soit l'organe de commande dans le dispositif "maître", soit l'organe commandé dans le dispositif "esclave", l'organe mobile étant articulé en son centre, avec trois degrés de liberté en rotation, sur un support monté sur l'embase avec possibilité de déplacement axial parrallèlement à l'axe du bras, ce grâce à quoi l'organe mobile possède un degré de liberté en translation axiale par rapport audit bras,
   . quatre dispositifs actionneurs approximativement parallèles à l'axe du bras, interposés entre l'embase et l'organe mobile et entourant le support, chaque dispositif actionneur comportant
      = une tringle sensiblement parallèle à l'axe du bras et supportée par l'embase de manière à pouvoir y coulisser parallèlement à l'axe du bras,
      = et une bielle de longueur fixe raccordée avec articulations en rotation à l'extrémité de la tringle et à l'organe mobile,
         les positions respectives des tringles sur l'embase et des articulations des bielles sur l'élément mobile étant telles que les bielles soient aptes à engendrer des couples selon trois axes de rotation sur l'organe mobile, lui conférant trois degrés de liberté en rotation par rapport au bras correspondant,
- et cinq dispositifs de transmission bidirectionnelle de mouvement linéaire qui sont interposés
   . pour quatre d'entre eux, entre les quatre dispositifs actionneurs du dispositif "maître" et les quatre dispositifs actionneurs correspondants du dispositif "esclave",
   . et, pour le cinquième, entre les supports respectifs de l'organe mobile de commande du dispositif "maître" et de l'organe mobile commandé du dispositif "esclave",
   . ces dispositifs de transmission bidirectionnelle étant agencés de manière telle que le déplacement linéaire d'un dispositif actionneur ou du support de l'organe mobile de commande du dispositif "maître" soit transmis sous forme d'un déplacement linéaire de même sens du dispositif actionneur correspondant ou du support de l'organe mobile commandé du dispositif "esclave".

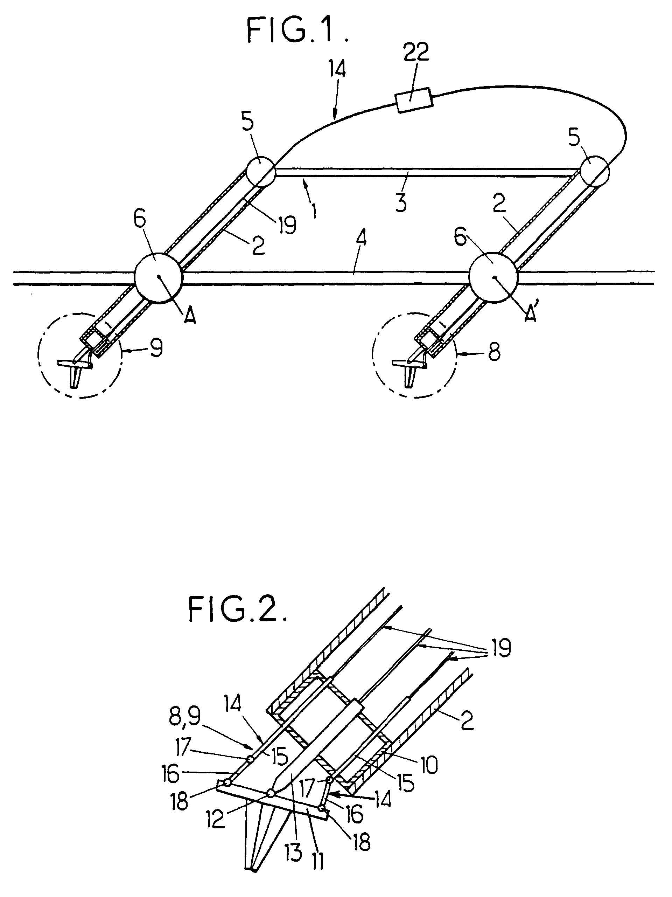

Un dispositif d'articulation à structure parallèle tel que précité est déjà connu de par le document cité plus haut FR-A-2 672 836 (voir revendication 5 et figure 1 dudit document), tandis que la conception d'un appareil "maître-esclave" à partir de deux tels dispositifs d'articulation est elle aussi évoquée (revendication 12 et figure 10) sans toutefois que des solutions pratiques de réalisation soient proposées. Les dispositions ci-dessus énoncées pour un appareil conforme à l'invention caractérisent une solution technique originale et sont à la base d'un appareil fonctionnellement efficace, qui possède six degrés de liberté.

On peut noter également que le dispositif de l'invention combine une structure mécanique à deux degrés de liberté, formant support d'outil, en forme de parallélogramme et deux poignets à structure parallèle dérivés de celui décrit dans le document FR 2 672 836. Le perfectionnement apporté au poignet consiste à mettre en oeuvre un actionneur concernant exclusivement le degré de liberté en translation, ce qui conduit à une structure maître-esclave à quatre degrés de liberté avec redondance de moyens en rotation. Un tel dispositif offre des capacités de déplacements qui ne peuvent pas être procurées par les dispositifs antérieurs.

Avantageusement, chaque dispositif de transmission de mouvement comporte un organe transmetteur souple agencé pour transmettre aussi bien les efforts de traction que les efforts de poussée, chaque dispositif de transmission comportant un câble souple enfermé, avec possibilité de libre coulissement longitudinal, dans une gaine dont chaque extrémité est ancrée à l'embase d'un bras ; à chaque dispositif de transmission de mouvement ainsi constitué peut être associé fonctionnellement un dispositif inverseur agencé pour que les deux extrémités de l'organe transmetteur, orientées parallèlement à l'axe des bras, sur les embases, aient des déplacements de même sens. Le recours à la solution technique qui vient d'être proposée permet d'établir une liaison souple et filiforme entre le dispositif "maître" et le dispositif "esclave", ce qui conduit à un appareil de réalisation simple et d'encombrement réduit, faisant appel à des organes rustiques, mais efficaces et donc peu coûteux. En particulier, on peut alors réaliser les deux bras sous forme tubulaire, ces bras renfermant les extrémités respectives des susdits dispositifs de transmission bidirectionnelle.

Par ailleurs, il est possible, et intéressant pour certaines applications, que les deux bras de la structure articulée en parallélogramme déformable présentent, au-delà de leur articulation avec le bâti, des longueurs différentes, l'amplitude du déplacement transmis par le dispositif de transmission bidirectionnelle interposé entre les supports respectifs des organes mobiles de commande et commandé étant modifiée dans le même rapport que le rapport des longueurs des deux bras ; ce grâce à quoi l'étendue du domaine de travail de l'appareil de télémanipulation est transformée dans le rapport des longueurs des bras ; dans ce cas on peut notamment faire en sorte que la longueur du bras du dispositif d'articulation "esclave" soit plus courte que la longueur du bras du dispositif d'articulation "maître", ce grâce à quoi les mouvements du dispositif d'articulation "maître" sont démultipliés avec un rapport de réduction égal au rapport des longueurs des bras par rapport aux mouvements correspondants effectués, sous sa commande, par le dispositif d'articulation "esclave" ; il est alors souhaitable que l'appareil de télémanipulation comporte en outre, associé au dispositif d'articulation "esclave", un dispositif de vision, notamment stéréoscopique, agencé pour fournir une image du champ de travail du dispositif d'articulation "esclave" avec un grossissement inverse du susdit rapport de réduction, de manière à constituer un appareil complet offrant pour l'opérateur toutes les facilités de mise en oeuvre.

On peut noter ici que l'appareil de l'invention présente une morphologie filiforme qui se prête bien à son emploi dans le domaine chirurgical ou dans tout domaine nécessitant une intervention dans un espace de travail restreint comme par exemple en microélectronique. Toutefois, l'intérêt de l'appareil de l'invention ne se limite pas à ces seules applications et couvre au contraire tous les domaines habituels de la télémanipulation.

On notera également qu'à l'exception des capteurs spécifiques accessoires, liés à l'application prévue pour l'appareil (en général une caméra), l'appareil de l'invention, tout en restituant les efforts, tant en traction et en compression qu'en rotation, ne nécessite aucun capteur, aucune électronique et donc aucun système informatique pour sa commande. Cette originalité a évidemment comme conséquence directe une réduction notable de son coût de fabrication.

L'invention sera mieux comprise à la lecture de la description détaillée qui suit de certains modes de réalisation préférés. Dans cette description, on se réfère aux dessins annexés sur lesquels :
- la figure 1 est une vue très schématique d'un appareil de télémanipulation de type "maître-esclave" agencé conformément à l'invention ;
- la figure 2 est une vue, à plus grande échelle et plus détaillée, de l'extrémité d'un des bras de l'appareil de la figure 1 ;
- les figures 3 et 4 sont des vues, à plus grande échelle, de respectivement deux variantes de réalisation d'articulations de l'appareil de la figure 1 ;
- la figure 5 est une vue , à plus grande échelle, d'autres articulations de l'appareil de la figure 1 ;
- les figures 6 et 7 sont des vues, à plus grande échelle et plus détaillées, de respectivement deux variantes de réalisation d'un dispositif inverseur de l'appareil de la figure 1 ; et
- la figure 8 est une vue très schématique d'une variante de réalisation de l'appareil de la figure 1.

A la figure 1 est représenté dans son ensemble, de façon schématique, un appareil de télémanipulation de type "maître-esclave" agencé conformément à l'invention.

Il comporte une structure articulée 1 en forme de parallélogramme déformable, comportant deux bras 2 parallèles, une traverse 3 et un bâti 4. La traverse 3 est reliée à libre rotation, par des articulations 5 à un degré de liberté, aux extrémités des bras 2 ; le bâti 4 est relié en libre rotation, par des articulations 6 à deux degrés de liberté, en des points A et A' intermédiaires respectifs des bras 2 ; les bras 2 se prolongent ainsi au-delà des articulations 6.

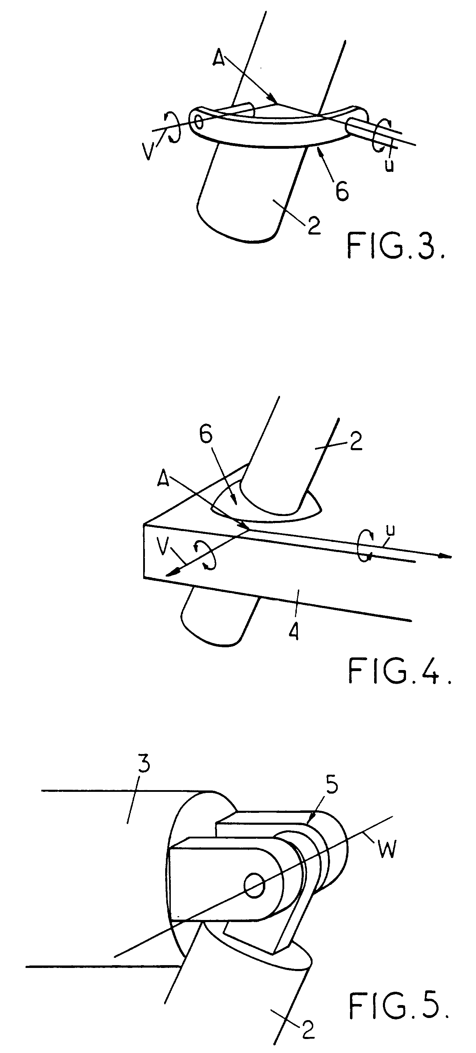

Les articulations 6 possèdent les deux degrés nécessaires de rotation autour de deux axes coplanaires et perpendiculaires l'un à l'autre au point A et respectivement au point A'. La figure 3 montre un premier agencement possible, du type Cardan, selon lequel le bras 2 peut pivoter autour de l'axe v, et le bras 2 et l'axe v peuvent pivoter autour de l'axe u supporté par le quatrième côté AA' du parallélogramme ; l'axe u peut être un arbre pivotant en bout sur le bâti 4 fixe.

On peut également avoir recours à une articulation sphérique 6, supportée par le bâti 4, comme montré à la fig. 4.

Les deux articulations 5 peuvent être agencées comme représenté à la figure 5, pour procurer un unique degré de liberté en rotation autour d'un axe w. Bien entendu, les axes w des articulations 5 et les axes v des articulations 6 sont mutuellement parallèles et perpendiculaires au plan du parallélogramme.

Aux extrémités libres respectives des deux bras 2 sont placés deux dispositifs, respectivement un dispositif "maître" 8 et un dispositif "esclave" 9, d'articulation à structure parallèle. Les deux dispositifs "maître" 8 et "esclave" 9 sont constitués de façon identique et sont agencés, d'une façon en soi connue, conformément aux enseignements du document FR-A-2 672 836 en correspondance avec le mode de réalisation de la figure 10 et de la revendication 5. A ce titre, chaque dispositif 8, 9 comporte, comme visible plus particulièrement à la figure 2, les éléments suivants :
- Une embase 10 qui est constituée par l'extrémité libre du bras 2 ; il peut s'agir, comme montré à la figure 2, d'un embout rapporté et fixé sur ou dans l'extrémité du bras 2.
- Un organe 11 mobile par rapport à l'embase 10, constituant l'organe de commande proprement dit du dispositif "maître" 8 et l'organe commandé (pince porte-outil notamment) du dispositif "esclave" 9. Cet organe mobile 11 est supporté centralement, avec une articulation 12 à trois degré de liberté en rotation, sur un support 13 monté sur l'embase 10 avec possibilité de déplacement axial par rapport audit bras. En l'occurence le support 13 est constitué par une tige sensiblement coaxiale au bras 2 et coulissant axialement par rapport à celui-ci. Dans le cas représenté, l'embase 10 supporte la tige 13 à libre coulissement. On notera qu'il aurait été possible également que le support 13 soit solidaire de l'embase 10, laquelle aurait été montée coulissante sur ou dans le bras 2. Grâce à cet agencement, l'organe mobile 11 dispose d'un degré de liberté en translation axiale.
- Quatre dispositifs actionneurs 14 approximativement parallèles à l'axe du bras, interposés entre l'extrémité libre du bras et l'organe mobile 11. Ces quatre dispositifs 14 actionneurs sont répartis autour du support 13 (seuls deux actionneurs ont été représentés à la figure 2). Chaque dispositif actionneurs 14 comporte :
   . une tringle 15 sensiblement parallèle à l'axe du bras 2 et supportée par l'embase 10 dans laquelle elle coulisse librement,
   . et une bielle 16 de longueur fixe raccordée avec articulations en rotation à l'extrémité de la tringle 15 et à l'organe mobile 11,
      les positions respectives des tringles 15 sur l'embase 10 et des articulations des bielles 16 sur l'organe mobile 11 étant telles que les bielles 16 soient aptes à engendrer des couples selon trois axes de rotation sur l'organe mobile 11, lui conférant trois degrés de liberté en rotation par rapport au bras 2.
   On notera ici que les liaisons 17 des bielles 16 avec les tringles 15 respectives sont des liaisons articulées dans l'espace, telles que rotules ou articulations à la Cardan, et que les liaisons 18 des bielles 16 avec l'organe mobile 11 sont des liaisons articulées dans l'espace telles que des rotules.
- Et enfin cinq dispositifs 19 de transmission bidirec tionnelle de mouvement linéaire (c'est-à-dire aptes à transmettre un mouvement linéaire sélectivement dans les deux sens possibles selon une direction donnée) qui sont interposés
   . pour quatre d'entre eux, entre les quatre dispositifs actionneurs 14 du dispositif "maître" 8 et les quatre dispositifs actionneurs 14 correspondants du dispositif "esclave" 9,
   . et, pour le cinquième, entre les supports respectifs 13 de l'organe mobile de commande du dispositif "maître" 8 et de l'organe mobile commandé du dispositif "esclave" 9.

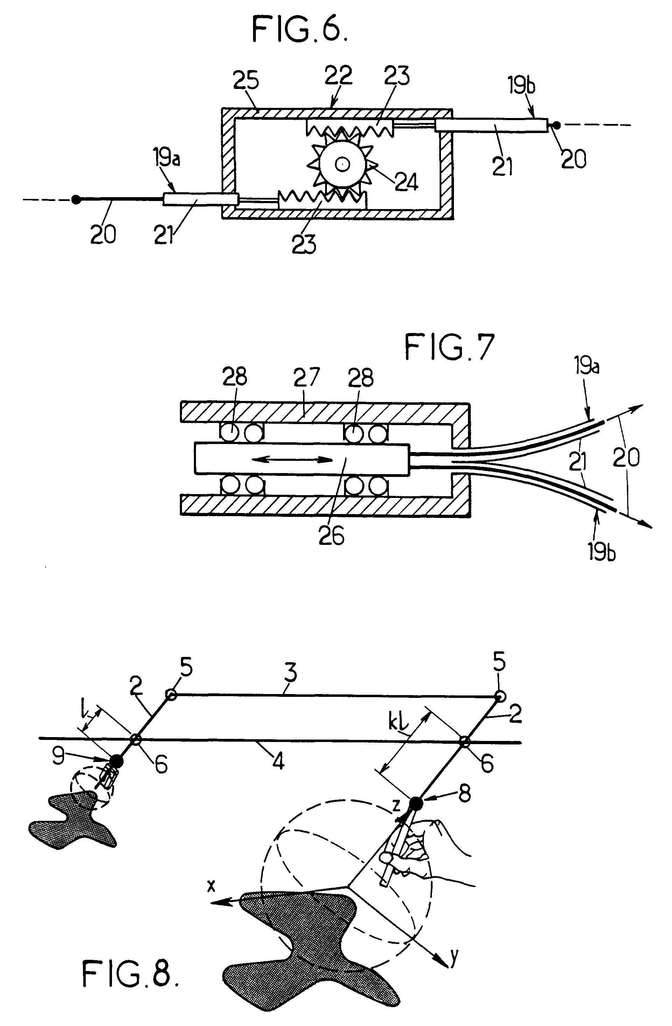

Une manière économique et simple de réaliser les dispositifs de transmission des efforts consiste à avoir recours à une liaison par corde à piano ou câble analogue 20 (voir fig. 6 et 7) enfermée dans une gaine flexible 21 ancrée à ses extrémités, qui est apte à transmettre des efforts bidirectionnellement. On pourrait bien sûr avoir recours à d'autres moyens connus, tels que des commandes à billes.

Pour conserver le sens de transmission du déplacement de l'organe mobile de commande à l'organe mobile commandé, on associe, à chaque dispositif de transmission 19, un dispositif inverseur 22 agencé de manière que les deux extrémités de l'organe transmetteur, le câble 20 ici, aient des déplacements de même sens aux extrémités respectives des bras 2.

Le dispositif inverseur 22 peut être réalisé comme montré à la figure 6. Le dispositif de transmission 19 est scindé en deux parties 19a et 19b disposées sensiblement bout-à-bout ; les extrémités des demi-câbles 20 sont raccordées à des ou conformées sous forme de crémaillères respectives 23 disposées face-à-face et engrènant avec une roue dentée intercalaire 24 montée à rotation folle sur le carter 25 du dispositif.

Le dispositif inverseur peut aussi être constitué comme montré à la figure 7. Les deux parties 19a et 19b du dispositif de transmission 19 sont réunies côte à côte, en faisceau, et sont solidarisées par tout moyen connu, par soudure ou bien, comme représenté, par sertissage dans un manchon 26, lequel est installé à libre coulissement axial dans une douille de guidage constitué par un carter 27 et, de préférence, avec interposition de guides à billes 28.

On notera que les bras 2 peuvent avantageusement être réalisée sous forme tubulaire, non seulement de manière à être indéformables pour un poids minimum, mais aussi pour servir de guide aux cinq dispositifs de transmission 19, dans les zones d'extrémité de ceux-ci.

Par ailleurs, on notera également que le dispositif de télémanipulation représenté à la figure 1 avec des bras 2 de même longueur confère des amplitudes de travail identique à l'organe de commande et à l'organe commandé. On peut envisager de donner des longueurs différentes aux deux bras 2 (la longueur de chaque bras étant considérée entre son articulation 6 et son extrémité libre) et de mettre en oeuvre un dispositif inverseur 22, dont le rapport de transmission des déplacements est différent de un, dans le dispositif de transmission interposé entre les supports 13 des organes mobiles 11 de chaque bras 2 ; on obtient ainsi des amplitudes différentes de déplacement linéaire de l'organe de commande et de l'organe commandé, les angles de rotation étant conservés identiques. En particulier, comme montré à la figure 8, le bras 2 du dispositif "maître" 8 peut recevoir une longueur de k fois supérieure à celle du bras 2 du dispositif "esclave" 9 : les déplacements linéaires de l'organe de commande du dispositif "maître" 8 sont alors transmis à l'organe commandé du dispositif "esclave" 9 avec une démultiplication dans un rapport k. Selon l'application visée, on pourra coupler ce dispositif de télémanipulation à un dispositif de vision, notamment de vision stéréoscopique reproduisant dans la lunette de l'opérateur une image virtuelle en trois dimensions, agrandie dans le rapport d'homothétie k, de manière que l'opérateur ait la sensation de travailler en direct sur cette image virtuelle. En outre, l'association de deux dispositifs complets de télémanipulation peut permettre à un opérateur de travailler avec ses deux mains.

## Revendications

1. Appareil de télémanipulation de type "maître-esclave" à six degrés de liberté comprenant:
- une structure articulée (1) en forme de parallélogramme déformable, comportant deux bras (2) parallèles réunis chacun, d'une part, à une traverse (3) par une articulation (5) à un degré de liberté en rotation autour d'un axe perpendiculaire au plan du parallélogramme et, d'autre part, à un bâti (4) par une articulation (6) à deux degrés de liberté en rotation autour de deux axes, le premier axe étant perpendiculaire au plan du parallélogramme et le second axe étant supporté par le quatrième côté du parallélogramme, les quatre articulations étant situées aux sommets du parallélogramme, les deux bras (2) se prolongeant au-delà de leurs articulations (6) respectives avec le bâti ;
- deux dispositifs (8, 9) d'articulation à structure parallèle, à savoir un dispositif "maître" et un "esclave", disposés respectivement à l'extrémité libre de chaque bras (2), chaque dispositif comportant:
. une embase (10) supportée par l'extrémité libre du bras correspondant (2),
. un organe (11) mobile par rapport à l'embase (10), formant soit l'organe de commande dans le dispositif "maître", soit l'organe commandé dans le dispositif "esclave", ledit organe mobile (11) étant articulé (12) en son centre, avec trois degrés de liberté en rotation, sur un support (13) monté sur l'embase (10) avec possibilité de déplacement axial parallèlement à l'axe du bras, ce grâce à quoi l'organe mobile possède un degré de liberté en translation axiale par rapport audit bras,
. quatre dispositifs actionneurs (14) approximativement parallèles à l'axe du bras, interposés entre l'embase (10) et l'organe mobile (11) et entourant le support (13), chaque dispositif actionneur comportant
= une tringle (15) sensiblement parallèle à l'axe du bras supportée par l'embase 10 et pouvant y coulisser librement parallèlement à l'axe du bras,
= et une bielle (16) de longueur fixe raccordée avec articulations en rotation à l'extrémité de la tringle (15) et à l'organe mobile (11),
les positions respectives des tringles (15) sur l'embase (10) et des articulation des bielles (16) sur l'élément mobile (11) étant telles que les bielles (16) soient aptes à engendrer des couples selon trois axes de rotation sur l'organe mobile lui conférant trois degrés de liberté en rotation par rapport au bras (2) correspondant,
- et cinq dispositifs (19) de transmission bidirectionnelle de mouvement linéaire qui sont interposés
. pour quatre d'entre eux, entre les quatre dispositifs actionneurs du dispositif "maître" (8) et les quatre dispositifs actionneurs correspondants du dispositif "esclave" (9),
. et, pour le cinquième, entre les supports respectifs de l'organe mobile de commande du dispositif "maître" (8) et de l'organe mobile commandé du dispositif "esclave" (9),
. ces dispositifs de transmission bidirectionnelle étant agencés de manière telle que le déplacement linéaire d'un dispositif actionneur ou du support de l'organe mobile de commande du dispositif "maître" soit transmis sous forme d'un déplacement linéaire de même sens du dispositif actionneur correspondant ou du support de l'organe mobile commandé du dispositif "esclave".

2. Appareil de télémanipulation selon la revendication 1, **caractérisé en ce que** l'articulation multiple (6) est du type Cardan.

3. Appareil de télémanipulation selon la revendication 1, **caractérisé en ce que** l'articulation multiple (6) est du type rotule.

4. Appareil de télémanipulation selon l'une quelconque des revendications 1 à 3, **caractérisé en ce que** chaque dispositif de transmission de mouvement (19) comporte un organe transmetteur souple agencé pour transmettre aussi bien les efforts de traction que les efforts de poussée.

5. Appareil de télémanipulation selon la revendication 4, **caractérisé en ce que** chaque dispositif de transmission de mouvement est du type comportant un câble souple (20) enfermé avec possibilité de libre coulissement longitudinal dans une gaine (21) dont chaque extrémité est ancrée à l'embase d'un bras (2).

6. Appareil de télémanipulation selon la revendication 4 ou 5, **caractérisé en ce qu'**à chaque dispositif de transmission de mouvement (19) est associé fonctionnellement un dispositif inverseur (22) agencé pour que les deux extrémités de l'organe transmetteur, orientées parallèlement à l'axe des bras, sur les embases, aient des déplacements de même sens.

7. Appareil de télémanipulation selon la revendication 6, **caractérisé en ce que** l'organe transmetteur (19) est constitué de deux demi-organes (19a, 19b) bout-à-bout et **en ce que** le dispositif inverseur (22) est du type à crémaillère, les extrémités accouplées des demi-organes étant agencées sous forme de crémaillères respectives (23) disposées face-à-face et engrenant avec une roue dentée (24) montée à libre rotation.

8. Appareil de télémanipulation selon la revendication 6, **caractérisé en ce que** l'organe transmetteur (19) est constitué de deux demi-organes (19a, 19b)dont les deux extrémités sont réunies en faisceau et **en ce que** le dispositif inverseur (22) est du type à "douille", les deux extrémités réunies en faisceau étant engagées à libre coulissement axial dans une douille de guidage (27).

9. Appareil de télémanipulation selon la revendication 8, **caractérisé en ce que** le dispositif est du type à "douille à billes" (27, 28).

10. Appareil de télémanipulation selon l'une quelconque des revendications 1 à 9, **caractérisé en ce que** les deux bras (2) sont réalisés sous forme tubulaire et renferment les parties extrêmes respectives des susdits dispositifs de transmission bidirectionnelle (19).

11. Appareil de télémanipulation selon l'une quelconque des revendications 1 à 10, **caractérisé en ce que** les deux bras (2) de la structure articulée en parallélogramme déformable présentent, au-delà de leur articulation (6) avec la traverse de pivotement (4), des longueurs différentes, et **en ce que** l'amplitude du déplacement transmis par le dispositif de transmission bidirectionnelle interposé entre les supports (13) des organes mobile (11) est modifiée dans le même rapport que le rapport des longueurs des deux bras, ce grâce à quoi l'appareil de télémanipulation est transformé dans le rapport des longueurs des bras et conserve les angles de rotation.

12. Appareil de télémanipulation selon la revendication 11, **caractérisé en ce qu'**il comporte associé au dispositif d'articulation "esclave", un dispositif de vision, notamment stéréoscopique, agencé pour fournir une image du champ de travail du dispositif d'articulation "esclave" avec un grossissement inverse du susdit rapport de réduction.

## Patentansprüche

1. Master-Slave-Fernhandhabungsgerät mit sechs Freiheitsgraden, enthaltend:
- einen mit Gelenken versehenen Aufbau (1) in verformbarer Parallelogrammform, der zwei parallele Arme (2) enthält, die jeweils einerseits mit einer Traverse (3) durch ein Gelenk (5) mit einem Drehungsfreiheitsgrad um eine zur Ebene des Parallelogramms senkrechte Achse und andererseits mit einem Tragelement (4) durch ein Gelenk (6) mit zwei Drehungsfreiheitsgraden um zwei Achsen verbunden sind, wobei die erste Achse senkrecht zur Ebene des Parallelogramms ist und die zweite Achse durch die vierte Seite des Parallelogramms getragen wird, wobei sich die beiden Arme (2) über ihre jeweiligen Gelenke (6) mit dem Tragelement hinaus fortsetzen;
- zwei Gelenkvorrichtungen (8, 9) in Parallelaufbau, nämlich eine "Master"- und eine "Slave"-Vorrichtung, die am freien Ende des einen bzw. anderen Armes (2) angeordnet sind, wobei jede Vorrichtung enthält:
• ein Fußstück (10), das durch das freie Ende des entsprechenden Armes (2) getragen wird,
• ein in bezug auf das Fußstück (10) bewegliches Organ (11), das entweder das Steuerorgan in der "Master"-Vorrichtung oder das gesteuerte Organ in der "Slave"-Vorrichtung bildet, wobei das mobile Organ (11) in seiner Mitte mit drei Drehungsfreiheitsgraden gelenkig (12) an einer Stütze (13) angebracht ist, die am Fußstück (10) mit der Möglichkeit der Axialverschiebung parallel zur Achse des Armes angebracht ist, dies auf Grund dessen, daß das bewegliche Organ einen Freiheitsgrad in der axialen Translation in bezug auf den genannten Arm besitzt,
• vier zur Achse des Armes angenähert parallele Betätigungsvorrichtungen (14), die zwischen dem Fußstück (10) und dem beweglichen Organ (11) angeordnet sind und die Stütze (13) umgeben, wobei jede Betätigungsvorrichtung enthält:
= einen zur Achse des Armes im wesentlichen parallelen Stab (15), der durch das Fußstück (10) getragen wird und sich dort frei parallel zur Achse des Armes verschieben kann,
= und eine Stange (16) von fester Länge, die mit Drehgelenken an das Ende des Stabes (15) und am beweglichen Organ (11) angeschlossen ist,
wobei die jeweiligen Positionen der Stäbe (15) am Fußstück (10) und der Gelenke der Stangen (16) am mobilen Organ (11) so sind, daß die Stangen (16) Momente um drei Drehachsen auf das bewegliche Organ erzeugen können, wobei ihr drei Drehungsfreiheitsgrade bezüglich dem entsprechenden Arm (2) verliehen werden,
- und fünf Vorrichtungen (19) zur bidirektionalen Übertragung linearer Bewegung, die eingefügt sind
• und zwar vier von ihnen zwischen den vier Betätigungsvorrichtungen der "Master"-Vorrichtung (8) und den vier entsprechenden Betätigungsvorrichtungen der "Slave"-Vorrichtung(9),
• und die fünfte zwischen der jeweiligen Stütze des beweglichen Steuerorgans der "Master"-Vorrichtung (8) und dem gesteuerten beweglichen Organ der "Slave"-Vorrichtung (9),
• wobei diese bidirektionalen Übertragungsvorrichtungen in solcher Weise eingerichtet sind, daß die lineare Verschiebung einer Betätigungsvorrichtung oder der Stütze des beweglichen Steuerorgans der "Master"-Vorrichtung in Form einer linearen Verschiebung der entsprechenden Betätigungsvorrichtung oder der Stütze des gesteuerten beweglichen Organs der "Slave"-Vorrichtung in gleicher Richtung übertragen wird.

2. Fernhandhabungsgerät nach Anspruch 1, **dadurch gekennzeichnet, daß** das Vielfach-Gelenk (6) ein Kardangelenk ist.

3. Fernhandhabungsgerät nach Anspruch 1, **dadurch gekennzeichnet, daß** das Vielfach-Gelenk ein Kugelkopfgelenk ist.

4. Fernhandhabungsgerät nach einem der Ansprüche 1 bis 3, **dadurch gekennzeichnet, daß** die Vorrichtung (19) zur Bewegungsübertragung ein nachgiebiges Übertragerorgan enthält, das zum Übertragen sowohl der Zugkräfte als auch der Schubkräfte eingerichtet ist.

5. Fernhandhabungsgerät nach Anspruch 4, **dadurch gekennzeichnet, daß** jede Vorrichtung zur Bewegungsübertragung derart ist, daß sie ein nachgiebiges Seil (20) enthält, das mit der Möglichkeit freier Längsverschiebung in einer Hülle (21) eingeschlossen ist, von der jedes Ende am Fußstück eines Armes (2) verankert ist.

6. Fernhandhabungsgerät nach Anspruch 4 oder 5, **dadurch gekennzeichnet, daß** jede Vorrichtung (19) zur Bewegungsübertragung funktionell mit einer Umkehrvorrichtung (22) verbunden ist, die dafür eingerichtet ist, daß die beiden Enden des Übertragerorgans, die parallel zur Achse der Arme ausgerichtet sind, an den Fußstücken Verschiebungen in gleicher Richtung haben.

7. Fernhandhabungsgerät nach Anspruch 6, **dadurch gekennzeichnet, daß** das Übertragerorgan (19) aus zwei mit den Enden aneinanderstoßenden Halborganen (19a, 19b) gebildet ist und daß die Umkehrvorrichtung (22) nach Zahnstangenart ist, wobei die fest verbundenen Enden der Halborgane jeweils in Form einer Zahnstange (23) ausgebildet sind, die gegenüberliegend angeordnet sind und mit einem Zahnrad (24) in Eingriff stehen, das frei drehbar angebracht ist.

8. Fernhandhabungsgerät nach Anspruch 6, **dadurch gekennzeichnet, daß** jedes Übertragerorgan (19) aus zwei Halborganen (19a, 19b) gebildet ist, deren beide Enden gebündelt verbunden sind, und daß die Umkehrvorrichtung (22) von der Art einer "Hülse" ist, wobei die beiden gebündelt verbundenen Enden axial frei verschieblich in einer Führungshülse (27) eingerichtet sind.

9. Fernhandhabungsgerät nach Anspruch 8, **dadurch gekennzeichnet, daß** die Vorrichtung von der Art "Hülsen mit Kugeln" (27, 28) ist.

10. Fernhandhabungsgerät nach einem der Ansprüche 1 bis 9, **dadurch gekennzeichnet, daß** die beiden Arme (2) in Röhrenform ausgebildet sind und die betreffenden Endteile der vorher genannten Vorrichtungen zur bidirektionalen Übertragung (19) einschließen.

11. Fernhandhabungsgerät nach einem der Ansprüche 1 bis 10, **dadurch gekennzeichnet, daß** die beiden Arme (2) des mit Gelenken versehenen Aufbaus in verformbarer Parallelogrammform über ihr Gelenk (6) mit der Schwenkungstraverse (4) hinaus unterschiedliche Längen aufweisen und daß die Amplitude der Verschiebung, die durch die zwischen den Stützen (13) der beweglichen Organe (11) angeordnete Vorrichtung zur bidirektionalen Übertragung übertragen wird, im gleichen Verhältnis geändert wird wie das Verhältnis der Längen der beiden Arme, dies auf Grund dessen, daß das Fernhandhabungsgerät im Verhältnis der Längen der Arme umgeformt wird und die Drehwinkel erhält.

12. Fernhandhabungsgerät nach Anspruch 11, **dadurch gekennzeichnet, daß** es in Verbindung mit der "Slave"-Gelenkvorrichtung eine insbesondere stereoskopische Sehvorrichtung, die zum Liefern eines Bildes des Arbeitsfeldes der "Slave"-Gelenkvorrichtung eingerichtet ist, mit einer inversen Vergrößerung des vorher genannten Reduktionsverhältnisses enthält.

## Claims

1. Remote manipulation apparatus of the "master-slave" type with six degrees of freedom comprising:
- an articulated structure (1) in the form of a deformable parallelogram, comprising two parallel arms (2) each joined, on the one hand, to a crosspiece (3) by an articulation (5) with one degree of freedom in rotation about an axis perpendicular to the plane of the parallelogram and, on the other hand, to a structure (4) by an articulation (6) with two degrees of freedom in rotation about two axes, the first axis being perpendicular to the plane of the parallelogram and the second axis being supported by the fourth side of the parallelogram, the four articulations lying at the vertices of the parallelogram, the two arms (2) extending beyond their respective articulations (6) to the structure;
- two articulation devices (8, 9) with parallel structure, namely a "master" device and a "slave" device, these devices being arranged respectively at the free end of each arm (2), each device comprising:
. a base (10) supported by the free end of the corresponding arm (2),
. a member (11) which can move relative to the base (10), forming either the control member in the "master" device, or the controlled member in the "slave" device, said moving member (11) being articulated (12) at its centre, with three degrees of freedom in rotation, to a support (13) mounted on the base (10) with the possibility of axial displacement parallel to the axis of the arm, whereby the moving member has a degree of freedom in axial translation relative to said arm,
. four actuator devices (14) approximately parallel to the axis of the arm, inserted between the base (10) and the moving member (11) and surrounding the support (13), each actuator device comprising
= a linkage (15) substantially parallel to the axis of the arm, supported by the base (10) and capable of sliding freely therein parallel to the axis of the arm,
= and a connecting piece (16) of fixed length connected with articulations in rotation to the end of the linkage (15) and to the moving member (11),
the respective positions of the linkages (15) on the base (10) and of the articulations of the connecting pieces (16) on the moving element (11) being such that the connecting pieces (16) are capable of generating moments about three axes of rotation on the moving member, giving it three degrees of freedom in rotation with respect to the corresponding arm (2),
- and five devices (19) for a two-way transmission of linear movement which are inserted
• in the case of four of them, between the four actuator devices of the "master" device (8) and the four corresponding actuator devices of the "slave" device (9),
• and, in the case of the fifth one, between the respective supports of the moving control member of the "master" device (8) and of the moving controlled member of the "slave" device (9),
• said two-way transmission devices being arranged in such a way that the linear displacement of one actuator device or of the support of the moving control member of the "master" device is transmitted in the form of a linear displacement in the same sense of the corresponding actuator device or of the support of the moving controlled member of the "slave" device.

2. Remote manipulation apparatus according to claim 1, **characterized in that** the multiple articulation (6) is of the Cardan joint type.

3. Remote manipulation apparatus according to claim 1, **characterized in that** the multiple articulation (6) is of the ball joint type.

4. Remote manipulation apparatus according to any one of claims 1 to 3, **characterized in that** each movement transmission device (19) comprises a flexible transmitter member designed to transmit both pulling forces and thrusting forces.

5. Remote manipulation apparatus according to claim 4, **characterized in that** each movement transmission device is of the type comprising a flexible cable (20) enclosed, with the possibility of free longitudinal sliding, in a sheath (21), each end of which is anchored to the base of an arm (2).

6. Remote manipulation apparatus according to claim 4 or 5, **characterized in that** an inverter device (22) designed so that the two ends of the transmitter member, which ends are directed parallel to the axis of the arms, on the bases will have displacements in the same sense is operationally associated with each movement transmission device (19).

7. Remote manipulation apparatus according to claim 6, **characterized in that** the transmitting member (19) consists of two half members (19a, 19b) end to end and **in that** the inverter device (22) is of the rack type, the joined-together ends of the half members being arranged in the form of respective racks (23) placed face to face and meshing with a freely rotating cog wheel (24).

8. Remote manipulation apparatus according to claim 6, **characterized in that** the transmitter member (19) consists of two half members (19a, 19b), the two ends of which are joined together as a bundle, and **in that** the inverter device (22) is of the "bushing" type, the two ends joined together as a bundle being engaged with free axial sliding in a guide bushing (27).

9. Remote manipulation apparatus according to claim 8, **characterized in that** the device is of the "ball bushing" type (27, 28).

10. Remote manipulation apparatus according to any one of claims 1 to 9, **characterized in that** the two arms (2) are tubular shaped and contain the respective end parts of the said two-way transmission devices (19).

11. Remote manipulation apparatus according to any one of claims 1 to 10, **characterized in that** the two arms (2) of the articulated structure in the form of a deformable parallelogram have, beyond their articulation (6) to the pivoting crosspiece (4), different lengths, and **in that** the amplitude of the displacement transmitted by the two-way transmission device inserted between the supports (13) of the moving members (11) is modified in the same ratio as the ratio of the lengths of the two arms, whereby the remote manipulation apparatus is transformed in the ratio of the lengths of the arms and maintains the angles of rotation.

12. Remote manipulation apparatus according to claim 11, **characterized in that** it comprises, associated with the "slave" articulation device, a viewing device, especially a stereoscopic viewing device, designed to provide an image of the field of operation of the "slave" articulation device with a magnification which is the inverse of the said reduction ratio.
